# EUROPÄISCHE PATENTANMELDUNG

(11) **EP 0 806 842 A1**
(43) Veröffentlichungstag der Anmeldung: **12.11.1997**
(21) Anmeldenummer: 97106510.7
(22) Anmeldetag: 19.04.1997
(51) Int. Cl.: H04B 1/713, H04Q 7/36

(54) **Verfahren zum Betreiben eines Netzes von Sekundärnutzern**

(30) Priorität: 25.04.1996 DE 19616430; 12.12.1996 DE 19651709
(71) Anmelder: Altvater Airdata Systems GmbH & Co. KG, 74906 Bad Rappenau (DE)
(72) Erfinder: Altvater, Ulrich, 74906 Bad Rappenau (DE); Bitsch, Bernhard, 68219 Mannheim (DE); Baron, Heinrich, 50321 Brühl (DE); Haaf, Peter, 69118 Heidelberg (DE); Kieslich, Bernd, 74889 Sinsheim (DE); Müller, Jürgen, 74861 Neudenau-Herbolzheim (DE)
(74) Vertreter: Schäfer, Wolfgang, Dipl.-Ing.

(57) **Zusammenfassung**

Beschrieben wird ein Verfahren zum Betreiben eines Netzes von Sekundärnutzern (13), das einen Satz von Kanälen (f(k)) in einem von Primärnutzern (24, 25, 26) genutzten Frequenzspektrum (23) im Frequenzsprungverfahren zur Datenübertragung verwendet. Ein von dem Netz von Sekundärnutzern (13) jeweils ausgewählter Kanal (f₆₀) wird vor einer möglichen Datenübertragung abgehört und daraufhin überprüft, ob Primärnutzer (24, 25, 26) diesen Kanal (f₆₀) z. Zt. belegen. In Abhängigkeit von dem Ergebnis dieser Überprüfung überträgt das Netz von Sekundärnutzern (13) entweder Daten über den ausgewählten Kanal (f₆₀) oder wählt einen neuen Kanal zur Überprüfung und möglichen Datenübertragung aus. Um den Datendurchsatz zu optimieren, wird ein Satz von für die Sekundärnutzer (13) verfügbaren Kanälen (f(k)) dadurch erzeugt, daß ein von einem Primärnutzer (24, 25, 26) nicht nur vorübergehend belegter Kanal (f(k)) zumindest zeitweise aus dem Satz von Kanälen entfernt wird.

## Beschreibung

Die vorliegende Erfindung betrifft ein Verfahren zum Betreiben eines Netzes von Sekundärnutzern, das einen Satz von Kanälen in einem von Primärnutzern genutzten Frequenzspektrum im Frequenzsprungverfahren zur Datenübertragung verwendet, wobei ein von dem Netz von Sekundärnutzern jeweils ausgewählter Kanal vor einer möglichen Datenübertragung abgehört und daraufhin überprüft wird, ob Primärnutzer diesen Kanal zur Zeit belegen, und das Netz von Sekundärnutzern in Abhängigkeit von dem Ergebnis dieser Überprüfung entweder Daten über den ausgewählten Kanal überträgt oder einen neuen Kanal zur Überprüfung und möglichen Datenübertragung auswählt.

Ein derartiges Verfahren ist aus der DE 44 07 544 A1 bekannt.

Das bekannte Verfahren dient zur Übertragung von Datenpaketen in einem Zusatznetz, das über Frequenzkanäle sendet, die zumindest zum Teil bereits in einem bestehenden Basisnetz zur digitalen Daten- und/oder Sprachübertragung verwendet werden. Bei diesem Verfahren wird in einem ersten Schritt ein von dem Basisnetz gerade nicht belegter Frequenzkanal ermittelt, woraufhin in einem zweiten Schritt ein Datenpaket über den ermittelten Frequenzkanal übertragen wird. Diese Schritte werden nach Art einer Frequenzsprungtechnik zyklisch so lange wiederholt, bis alle Datenpakete einer Sendung übertragen wurden.

Mit dem bekannten Verfahren ist es möglich, durch die Verwendung der Frequenzsprungtechnik bestehende Kanäle besser auszunutzen, ohne daß das jeweilige Basisnetz gestört wird.

Wie in der Frequenzsprungtechnik üblich, werden die einzelnen Datenpakete zeitlich gestaffelt über verschiedene Frequenzkanäle übertragen, wobei die Last gleichmäßig auf die zur Verfügung stehenden Kanäle verteilt wird, die gerade nicht von dem Basisnetz verwendet werden.

Die zugrundeliegende Frequenzsprungtabelle wird hier pseudozufällig generiert, wobei die Zieladresse in die Kanalberechnung mit einfließt. Über den jeweiligen Kanal wird in einem bestimmten Zeitschlitz nur ein bestimmter Sekundärnutzer angesprochen, so daß die Zuordnung der Kanäle zu den Sekundärnutzern lastunabhängig erfolgt.

Wegen weiterer Einzelheiten des bekannten Verfahrens wird auf die eingangs genannte DE 44 07 544 verwiesen.

Die Auswahl eines gerade nicht von dem Basisnetz belegten Frequenskanales erfolgt bei diesem Verfahren so, daß zunächst einer der mehreren Frequenzkanäle ausgewählt wird, woraufhin dann dieser ausgewählte Kanal abgehört wird, um zu überprüfen, ob das Basisnetz gerade auf diesem Frequnzkanal sendet. Wenn bei dieser Abhörung kein Signal empfangen wird, so wird davon ausgegangen, daß dieser Kanal von dem Zusatznetz verwendet werden kann.

Wenn jedoch festgestellt wird, daß der ausgewählte Kanal gerade von einem Primärnutzer benutzt wird, so verstreicht der Zeitschlitz ungenutzt, d.h. über den ausgewählten Kanal wird kein Datenpaket übertragen, um den Primärnutzer nicht zu stören.

Bei ersten Testeinsätzen des bekannten Verfahrens hat sich herausgestellt, daß es ohne Beeinträchtigung des Basisnetzes so lange einwandfrei arbeitet, wie die Bandbreiten der Empfänger des Zusatznetzes nicht wesentlich schmaler sind als die der Empfänger des Basisnetzes. Der Betrieb eines Zusatznetzes auf dem D1- oder D2-Netz bereitet somit keine Probleme.

Schwierigkeiten kann es jedoch bei der Verwendung des ISM-Frequenzbereiches geben, der bei 2,4 GHz angesiedelt ist. Bei dem ISM-Bereich (Industrial Scientific Medical Application) handelt es sich um einen nicht geschützten Bereich, in dem u.a. Mikrowellenherde abstrahlen, aber z. B. auch drahtlose Fernsehkameras sowie andere Primärnutzer arbeiten. Die Sender und Empfänger dieser Primärnutzer sind oft sehr breitbandig, während die Empfänger des Zusatznetzes sehr schmalbandig sind, z. B. nur 1 MHz breit sind, um in dem Basisnetz eine große Anzahl von Kanälen für das Zusatznetz zur Verfügung zu haben.

Ein sehr breitbandiger Primärnutzer überdeckt nun eine ganze Anzahl dieser Kanäle, wobei in den Randbereichen der Glockenkurve des Spektrums des Primärnutzers die Energie des Primärsenders so gering ist, daß ein Sekundärnutzer in den dort liegenden Kanälen den Primärnutzer nicht mehr erkennen kann. Das Netz der Sekundärnutzer wird folglich auch auf Kanälen senden, die in den Randbereichen der Glockenkurven der Primärnutzer liegen, so daß der Empfänger des Primärnutzers dieses Signal wegen der größeren Bandbreite dennoch auffangen kann, wodurch eine empfindliche Störung des Primärnutzers möglich ist. Ferner decken modulierte Hochfrequenzsignale nicht zu jedem Zeitpunkt der Sendeaktivität die gesamte eigene Bandbreite ab, so daß ein sehr kurzes, schmalbandiges Abhören in einem eigentlich benutzten Bereich ebenfalls zu einer fälschlichen Annahme der freien Verfügbarkeit führen kann. Bei den erwähnten drahtlosen Fernsehkameras führt dies zu einer Störung, bei der z.B. in dem übertragenen Bild schwarze Balken auftauchen.

Prinzipiell tritt dieses Problem in jedem Netz auf, wo Primärnutzer mit einer größeren Bandbreite senden und empfangen als Sekundärnutzer. Die nicht vorveröffentlichte deutsche Patentanmeldung 196 16 430 beschäftigt sich mit dem Problem, wie eine derartige Störung der Primärnutzer vermieden werden kann.

Bei dem dort beschriebenen Verfahren werden zusätzlich zu dem ausgewählten Kanal weitere Kanäle zumindest einmal von der Datenübertragung ausgeschlossen, wenn das Abhören des ausgewählten Kanales ergibt, daß Primärnutzer auf diesem Kanal gerade senden.

Wenn ein Sekundärnutzer einen Primärnutzer auf einem ausgewählten Kanal erkennt, so sperrt er z. B. weitere Kanäle im Bereich dieses ausgewählten Kanales, so daß diese bei einem der nächsten Frequenzsprünge nicht verwendet werden, auch wenn das Abhören dieser Kanäle keine Signale von Primärnutzern ergeben sollte. Mit anderen Worten, wenn einmal ein ausgewählter Kanal im mittleren Breich der Glockenkurve eines Primärnutzers liegt, so werden auch die in den mit schwächerer Sendeenergie versehenen Randbereichen der Glockenkurve liegenden Kanäle zunächst einmal von dem Sekundärnutzer nicht mehr verwendet. Da sämtliche Kanäle des zur Verfügung stehenden Frequenzspektrums statistisch gleichverteilt von dem Sekundärnutzer verwendet werden, wird damit eine mögliche Interferenz mit dem Primärnutzer für eine gewisse Zeitspanne verhindert. Solange der Primärnutzer auf Sendung ist, werden aber immer wieder ausgewählte Kanäle im mittleren Bereich seiner Glockenkurve liegen, so daß immer wieder Kanalbereiche für die Sekundärnutzer gesperrt werden.

Es hat sich herausgestellt, daß dieses sehr einfache Verfahren ausreicht, um Störungen von Primärnutzern in großem Maße zu vermeiden.

Sowohl bei dem eingangs erwähnten, bekannten Verfahren als auch bei dem Verfahren gemäß der älteren Anmeldung ist von Nachteil, daß der Datendurchsatz durch das Netz von Sekundärnutzern beeinträchtigt wird, wenn Primärnutzer Kanäle aus dem Frequenzspektrum nicht nur vorübergehend belegen. Bei beiden Verfahren erfolgt die Datenübertragung nämlich in sogenannten Zeitschlitzen, die durch eine allen Sekundärnutzern gemeinsame Systemzeit miteinander synchronisiert werden. Welcher Kanal in dem jeweiligen Zeitschlitz gerade zur Datenübertragung zur Verfügung steht, wird über einen festen Algorithmus ermittelt, der die Systemzeit verarbeitet.

Mit anderen Worten, für jeden Zeitschlitz ist durch die Systemzeit für alle Sekundärnutzer definiert, über welchen Kanal Daten zu übertragen sind. Damit die Synchronisation zwischen den Sekundärnutzern nicht verlorengeht, dürfen weder die Zeitschlitze verlassen noch darf von dem Frequenzsprungmuster abgewichen werden.

Das bedeutet jedoch, daß insbesondere ein breitbandiger Primärnutzer sowie auch Sekundärnutzer, die zwar in das Netz eingeschaltet sind, jedoch gerade keinen Kommunikationsbedarf haben, Kanäle und damit Zeitschlitze blockieren, wodurch der Datendurchsatz des gesamten Netzes von Sekundärnutzern merklich beeinträchtigt werden kann.

Vor diesem Hintergrund ist es Aufgabe der vorliegenden Erfindung, das eingangs genannte Verfahren auf möglichst einfache Weise so weiterzubilden, daß der Datendurchsatz durch das Netz von Sekundärnutzern erhöht wird, wobei eine Störung auch von solchen Primärnutzern zuverlässig vermieden werden soll, die breitbandiger arbeiten als die Sekundärnutzer.

Bei dem eingangs genannten Verfahren wird diese Aufgabe erfindungsgemäß dadurch gelöst, daß ein Satz von für die Sekundärnutzer verfügbaren Kanälen dadurch erzeugt wird, daß ein von einem Primärnutzer nicht nur vorübergehend belegter Kanal zumindest zeitweise aus dem Satz von Kanälen entfernt wird.

Ein Sekundärnutzer für ein Netz von derartigen Sekundärnutzern, das einen Satz von Kanälen in einem von Primärnutzern genutzten Frequenzspektrum im Frequenzsprungverfahren zur Datenübertragung verwendet, wobei ein von dem Netz von Sekundärnutzern jeweils ausgewählter Kanal vor einer möglichen Datenübertragung abgehört und daraufhin überprüft wird, ob Primärnutzer diesen Kanal z. Zt. belegen, und das Netz von Sekundärnutzern in Abhängigkeit von dem Ergebnis dieser Überprüfung entweder Daten über den ausgewählten Kanal überträgt oder einen neuen Kanal zur Überprüfung und möglichen Datenübertragung auswählt, ist folglich erfindungsgemäß dazu eingerichtet, den Satz von Kanälen dynamisch zu verwalten, um der Belegung von Kanälen durch Primärnutzer Rechnung zu tragen, wobei der Sekundärnutzer vorzugsweise als Zentralstation dazu eingerichtet ist, einen aktuellen Satz von verfügbaren Kanälen zu erzeugen und diesen an Anwenderstationen des Netzes zu übertragen.

Die der Erfindung zugrundeliegende Aufgabe wird auf diese Weise vollkommen gelöst.

Die Erfinder der vorliegenden Anmeldung haben nämlich erkannt, daß auf diese einfache Weise der Datendurchsatz des Netzes von Sekundärnutzern dadurch merklich erhöht wird, daß nicht nur temporär von Primärnutzern belegte Kanäle aus der Frequenzsprungtabelle entfernt werden. Mit anderen Worten, bei dauernder oder häufiger Sendung eines Primärnutzers auf einem Kanal wird dieser schon bei der Auswahl nicht mehr berücksichtigt. Da ein derartiger Kanal also übersprungen wird, steht der Zeitschlitz für den nächsten Kanal zur Verfügung.

Damit wird aber der Datendurchsatz auch dann nicht merklich beeinträchtigt, wenn mehrere, auch breitbandige Dauersender im Frequenzband vorhanden sind, weil der Datenverkehr jetzt über eine geringere Anzahl von Kanälen abgewickelt wird. Das bedeutet, daß verglichen mit dem bekannten Verfahren die noch verfügbaren Kanäle pro Zeiteinheit häufiger verwendet werden. Da jedoch vor jeder Übertragung von Datenpaketen der jeweils ausgewählte Kanal daraufhin überprüft wird, ob ein Primärnutzer diesen Kanal z. Zt. belegt, wird eine Störung der Primärnutzer nach wie vor vermieden.

Der Ausschluß eines Kanals aus dem Satz verfügbarer Kanäle kann z.B. für eine fest vorgegebene Zeitdauer oder aber so lange erfolgen, bis eine Testüberprüfung ergeben hat, daß der Kanal wieder verfügbar ist, so daß er in den Satz von Kanälen wieder aufgenommen werden kann.

Bisher war davon ausgegangen worden, daß von der festen Frequenzsprungtabelle nicht abgewichen werden darf, um die Synchronisation des Netzes nicht zu zerstören. Die Erfinder der vorliegenden Anmeldung haben dieses Vorurteil überwunden, da sie erkannt haben, daß eine Neusynchronisation möglich ist und Zeitvorteile bietet.

Durch die Änderung des entweder durch eine Tabelle oder einen Algorithmus vorgegebenen Frequenzsprungmusters kann zunächst einmal die Synchronisation in dem Netz von Sekundärnutzern verloren gehen. Dieses Netz kann entweder hierarchisch aufgebaut sein, so daß eine Zentralstation oder ein Master den Datenverkehr zu den Anwenderstationen oder Slaves regelt, wobei andererseits auch eine dezentrale Struktur mit gleichberechtigten Anwenderstationen denkbar ist. Bei der hierarchischen Struktur bestimmt der Master die Änderung des Frequenzsprungmusters, wie es weiter unten noch beschrieben wird. Bei einem dezentralen Netz müssen dagegen Abstimmvorgänge eingeleitet werden, bei denen sich die einzelnen Anwenderstationen über ein neues Frequenzsprungmuster einigen.

Selbstverständlich kann auch eine derartige Neusynchronisation des Netzes von Sekundärnutzern nicht ohne Zeitverlust erfolgen, der Zeitverlust durch Zeitschlitze, die verstreichen müssen, ohne daß über sie Daten übertragen werden können, kann jedoch erheblich größer sein. Es wird sich daher nur dann anbieten, auf ein neues Frequenzsprungmuster zu synchronisieren, wenn ein nicht nur kurzfristiger Rückgang des Datendurchsatzes infolge von Primärnutzern bemerkt wird.

In einer Weiterbildung ist es bevorzugt, wenn die Kanäle aus dem Satz von verfügbaren Kanälen in einer Frequenzsprungtabelle abgelegt sind, die zusammen mit einer Systemzeit definiert, welcher Kanal als nächster auszuwählen ist, und die in Abhängigkeit von der Belegung von Kanälen durch Primärnutzer aktualisiert wird.

Die Kanäle können in der Frequenzsprungtabelle dabei pseudozufällig so verteilt werden, daß in zwei aufeinanderfolgenden Zeitschlitzen Kanäle verwendet werden, die einen großen Frequenzabstand zueinander haben. Dies ist z.B. bei Mehrfachreflexionen von Vorteil, die bei bestimmten Phasenlagen zu destruktiven Interferenzen und damit zu einem Fehlschlagen bei der Datenübertragung führen können. Wenn der auf diese fehlgeschlagene Übertragung folgende Kanal frequenzmäßig möglichst weit von dem vorhergehenden Kanal entfernt ist, ist die Wahrscheinlichkeit relativ gering, daß auch bei dem zweiten Kanal die Phasenlage so ist, daß durch Mehrfachreflexionen destruktive Interferenzen auftreten. Weiter ist zu bedenken, daß derartige Mehrfachreflexionen häufig durch bewegliche Hindernisse, wie z.B. Kraftfahrzeuge, Flugzeuge, bestimmte Wetterlagen etc., hervorgerufen werden, so daß sie nur temporär zur Behinderung des Datenverkehrs führen. Durch die Anordnung der Kanäle in der Frequenzsprungtabelle kann jetzt dafür gesorgt werden, daß Kanäle mit ähnlicher Phasenlage zeitlich weit auseinander liegen, so daß nicht bei mehreren Kanälen nacheinander dieselben störenden Interferenzen auftreten können. Auch hierdurch wird also für eine Erhöhung des Datendurchsatzes gesorgt.

Da im übrigen die Frequenzsprungtabelle zyklisch synchron mit der Systemzeit abgearbeitet wird, findet eine statistische Gleichverteilung der Last über die verfügbaren Kanäle statt. Da nicht ganz auszuschließen ist, daß ein sich einschaltender Primärnutzer gerade auf die Sendung eines Sekundärnutzers trifft, der die Belegung dieses Kanals durch einen Primärnutzer nicht vorher erkennen konnte, wird durch diese Gleichverteilung die Wahrscheinlichkeit über das gesamte Frequenzspektrum verteilt, so daß die Störung von Primärnutzern maximal vermieden wird.

Die Aktualisierung der Frequenzsprungtabelle im Hinblick auf das Entfernen von nicht nur temporär durch Primärnutzer belegten Kanälen kann entweder dadurch erfolgen, daß diese Kanäle aus der Frequenzsprungtabelle entfernt werden, wobei die Frequenzsprungtabelle dann lediglich zusammengeschoben wird, um die so entstehenden Leerstellen zu füllen. Alternativ ist es auch möglich, die Frequenzsprungtabelle neu zu generieren, damit die pseudo-zufällige Verteilung der Kanäle erhalten bleibt.

Andererseits ist es bevorzugt, wenn aus einer Systemzeit des Netzes von Sekundärnutzern sowie dem Satz der verfügbaren Kanäle eine Pseudo-Zufallszahl generiert wird, die bestimmt, welcher Kanal als nächster auszuwählen ist.

Hier ist von Vorteil, daß keine Frequenzsprungtabellen aufwendig aktualisiert werden müssen, sondern daß vielmehr der neue Satz an verfügbaren Kanälen unmittelbar in den Algorithmus eines Pseudo-Zufallszahlengenerators eingeht, der für eine pseudo-zufällige Verteilung der Kanäle über der Zeit sorgt.

Der Pseudo-Zufallszahlengenerator kann z.B. eine Pseudo-Zufallszahl erzeugen, die aus einem Zahlenbereich stammt, der durch die gesamte Zahl der verfügbaren Kanäle bestimmt wird. Wenn z.B. von 80 Kanälen eines Frequenzspektrums nur 60 für Sekundärnutzer verfügbar sind, so liegt die Pseudo-Zufallszahl z.B. zwischen 0 und 59. Diese Zahl stellt dann einen Zeiger dar, über den aus dem Satz der 60 verfügbaren Kanäle genau einer ausgewählt wird. Die Pseudo-Zufallszahl 0 kann so z.B. den Kanal 3 auswählen, wenn die Kanäle 1 und 2 vorübergehend aus dem Satz der verfügbaren Kanäle entfernt wurden.

Weiter ist es bevorzugt, wenn das Netz von Sekundärnutzern eine Zentralstation sowie mehrere Anwenderstationen umfaßt, wobei die Zentralstation den Satz von verfügbaren Kanälen erzeugt und an die Anwenderstationen weitergibt.

Hier ist von Vorteil, daß die Neusynchronisation des Netzes von Sekundärnutzern ohne großen Zeitverlust und auf einfache Weise dadurch erfolgt, daß die Zentralstation anhand eigener Messungen oder anhand von Informationen, die ihm Anwenderstationen übermitteln, den aktuellen Satz der verfügbaren Kanäle bestimmt und in einem speziellen Steuerpaket den Anwederstationen mitteilt. Dieses Steuerpaket kann entweder die neue Frequenzsprungtabelle oder Sequenz-Parameter enthalten, die die neue Frequenzsprungtabelle eindeutig definieren bzw. in den Algorithmus des Pseudo-Zufallszahlengenerators eingehen. Aufgrund der Systemzeit können sich die Anwenderstationen dann mit der Zentralstation neu synchronisieren.

Nach dem Einschalten des Netzes oder einer weiteren Anwenderstation wird zunächst auf ein statisch hinterlegtes Frequenzsprungmuster zurückgegriffen. Es ist lediglich eine Synchronisation der Systemzeit erforderlich.

Eine Anwenderstation, die sich jedoch nach einer Neusynchronisation des Netzes von Sekundärnutzern einschaltet, ist damit zunächst nicht mit dem Netz synchronisiert, da sie von einem Satz von verfügbaren Kanälen ausgeht, aus dem kein Kanal entfernt wurde. Um sich hier zu synchronisieren, sucht die Anwenderstation unabhängig von dem Raster der Zeitschlitze nach Sendungen einer Zentralstation. Sobald die neue Anwenderstation eine Sendung der Zentralstation empfangen hat, fordert sie von der Zentralstation das Servicepaket an, über das sie sich mit dem Netz synchronisieren kann.

Allgemein ist es bevorzugt, wenn zusätzlich zu dem ausgewählten zumindest noch ein weiterer Kanal zumindest einmal nicht zur Datenübertragung verwendet wird, wenn der ausgewählte Kanal gerade von einem Primärnutzer belegt ist.

Diese Maßnahme ist aus der eingangs erwähnten, älteren Patentanmeldung bereits bekannt und weist die oben bereits beschriebenen Vorteile auf, wonach auch ein breitbandiger Primärnutzer nicht durch Sendungen von Sekundärnutzern im Randbereich der Bandbreite des Primärnutzers gestört wird.

Weiter ist es bevorzugt, wenn jedem Kanal zumindest eine Zustandsvariable zugeordnet ist, deren Wert zyklisch aktualisiert wird und angibt, ob und in welcher Form der ihr zugeordnete Kanal durch Primärnutzer belegt ist, wobei vorzugsweise die zumindest eine Zustandsvariable des ausgewählten Kanales sowie die der weiteren Kanäle auf einen Sperrwert gesetzt werden, wenn das Abhören des ausgewählten Kanales ergibt, daß ein Primärnutzer auf diesem Kanal gerade sendet.

Hier ist von Vorteil, daß eine Matrix oder auch eine einfache Liste angelegt werden kann, die die Zustandsvariablen sämtlicher zur Verfügung stehender Kanäle beinhaltet. Anhand dieser Liste oder Matrix sowie anhand der Werte der einzelnen Zustandsvariablen kann dann auf einfache Weise der Belegungsgrad des gesamten Frequenzspektrums ermittelt werden. Es handelt sich hier sozusagen um einen Spektrumanalysator, der angibt, welche Kanäle gerade belegt sind. Diese Liste oder Matrix der Zustandsvariablen kann dann für die obenerwähnte Interpolation des Frequenzspektrums des Primärnutzers sowie für die Bestimmung der Kanäle verwendet werden, die aus dem Satz der verfügbaren Kanäle entfernt werden. Eine Spalte dieser Matrix kann Werte beinhalten, die einen Wartezeitraum definieren, währenddessen ein Kanal selbst bei negativem Abhörergebnis nicht genutzt werden darf.

Anhand der Zustandsvariablen kann jetzt entschieden werden, ob der ausgewählte Kanal lediglich von der Datenübertragung einmal ausgeschlossen werden soll oder aber aus dem Satz von verfügbaren Kanälen zu entfernen ist. Die Zustandsvariablen sämtlicher Kanäle werden zyklisch aktualisiert, so daß sie auch für die Entscheidung herangezogen werden können, ob der Kanal wieder in den Satz von verfügbaren Kanälen aufgenommen werden kann und/oder wieder zur Datenübertragung zur Verfügung steht.

Weiter ist es bevorzugt, wenn zumindest einigen Kanälen weitere Zustandsvariablen zugeordnet sind, deren Werte aus Abhörergebnissen gebildet und dazu verwendet werden, den Wert der zumindest einen Zustandsvariablen zu aktualisieren.

Hier ist von Vorteil, daß die Zustandsvariablen nicht nur den reinen Belegtzustand in Form einer Ja/Nein-Entscheidung sondern weitere Informationen über den jeweils ausgewählten Kanal liefern können. Eine der weiteren Zustandsvariablen kann bspw. die mittlere Signalstärke des auf dem ausgewählten Kanal sendenden Primärsenders enthalten, während eine weitere Zustandsvariable z.B. die durchschnittliche "Trefferquote" bei der Abhörung des ausgewählten Kanales wiedergeben kann. Aus diesen weiteren Informationen über den Zustand des ausgewählten Kanales kann dann abgeleitet werden, ob die zumindest eine Zustandsvariable inkrementiert oder dekrementiert werden muß oder aber ihren ursprünglichen Wert beibehält. Ferner können die Werte dieser weiteren Zustandsvariablen dazu verwendet werden, die Zahl und Lage der zu sperrenden Kanäle zu bestimmen.

Ferner ist es bevorzugt, wenn beim Abhören eines ausgewählten Kanales dessen Signalpegel in zeitlichen Abständen N mal auf das Überschreiten einer Signalschwelle abgetastet wird, wobei der Signalpegel des abgetasteten Kanales die Signalschwelle vorzugsweise M mal überschreiten muß, damit ein Senden von Primärnutzern auf diesem Kanal erkannt wird. M ist dabei vorzugsweise größer oder gleich N/2. Allgemein gilt jedoch 0 < M ≤ N.

Hier ist von Vorteil, daß durch die größere Anzahl von Abtastungen sichergestellt wird, daß der ausgewählte Kanal nicht gerade während einer "Sendepause" oder Übertragungslücke abgefragt wurde. Weiter ist von Vorteil, daß die Signalschwelle sehr niedrig bereits im Bereich des Rauschens angesetzt werden kann, weil nicht bereits eine beliebige Überschreitung der Signalschwelle, sondern erst M Überschreitungen ausreichen, damit eine Sendung eines Primärnutzeres auf diesem Kanal angenommen wird. Ein besonders sicheres Erkennen einer derartigen Sendung auf einem ausgewählten Kanal ergibt sich, wenn mehr als die Hälfte der Abtastungen zu einem Signal oberhalb der Signalschwelle führen muß.

Weiter ist es bevorzugt, wenn M dynamisch in Abhängigkeit von einer Auswertung des Abhörens des ausgewählten Kanales bestimmt wird.

Hier ist von Vorteil, daß das neue Verfahren nicht auf die Nutzung einer reinen Wartezeitvariablen beschränkt ist, vielmehr können auch weitere Zustandsvariablen verwendet werden, zu denen etwa die durchschnittliche Trefferquote M beim Abhören eines ausgewählten Kanales oder aber der durchschnittliche Signalpegel des abgehörten Kanales zählen können. Diese Variablen können z.B. so ausgewertet werden, daß in Abhängigkeit des gemessenen Signalpegels die Anzahl der weiter zu sperrenden Kanäle variiert wird. Bei der Bewertung der einzelnen Abhörergebnisse muß die Trefferquote M ferner nicht zwingend größer oder gleich N/2 sein, auch bei einer geringeren Trefferquote, die jedoch mit aufeinanderfolgenden starken Meßpegeln einhergeht, kann eine Kanalbelegung angenommen werden. Die Zustandsvariable kann ferner dazu verwendet werden, die zusätzlich als belegt zu kennzeichnenden Kanäle oberhalb und unterhalb des ausgewählten Kanales unabhängig voneinander festzulegen, so daß die weiter zu sperrenden Kanäle nicht zwangsläufig symmetrisch zu dem ausgewählten Kanal liegen.

Bei dem neuen Verfahren werden also Kanäle, für die sich aus Ihrer Zustandsvariable ergibt, daß sie nicht nur temporär von Primärnutzern belegt sind, zumindest für eine bestimmte Zeit vollständig aus dem Satz von verfügbaren Kanälen entfernt, sie nehmen also an dem Frequenzsprungverfahren nicht teil und belegen auch keine Zeitschlitze. Zusätzlich kann anhand der Zustandsvariablen erkannt werden, ob es sich um einen breitbandigen Primärnutzer handelt, so daß außer dem ausgewählten Kanal, auf dem eine Sendung des Primärnutzers erkannt wurde, noch weitere Kanäle gesperrt werden, so daß insgesamt die gesamte Bandbreite des Primärnutzers für die Sekundärnutzer nicht zur Verfügung steht. Wenn es sich nur um einen temporären, breitbandigen Primärnutzer handelt, wird der Satz von verfügbaren Kanälen nicht verändert. Zeigen die Zustandsvariablen jedoch an, daß der Primärnutzer z.B. eine hohe Trefferquote aufweist, so werden die zugeordneten Kanäle aus dem Satz von verfügbaren Kanälen entfernt, indem z.B. die Frequenzsprungtabelle neu definiert wird.

Dieses neue Verfahren ermöglicht somit eine Optimierung bei der Ausnutzung von zur Verfügung stehenden Kanalkapazitäten auch in solchen Netzen, in denen eine Störung der Primärnutzer durch die Sekundärnutzer mit sehr großer Sicherheit vermieden werden muß.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: ein schematisches Beispiel für ein Netz von Sekundärnutzern;
- Fig. 2: ein schematisches Beispiel für eine von dem Netz aus Fig. 1 verwendete Frequenzsprungtabelle;
- Fig. 3: ein schematisches Beispiel eines Frequenzspektrums eines Basisnetzes, dem das Netz aus Fig. 1 überlagert wird;
- Fig. 4: die Aufteilung eines Zeitschlitzes des Netzes aus Fig. 1 auf die verschiedenen Operationen;
- Fig. 5: in einem anderen Maßstab den Beginn des Zeitschlitzes aus Fig. 4;
- Fig. 6: ein schematisches Beispiel für eine von dem Netz aus Fig. 1 verwendete Frequenzsprungtabelle, bei der von dem Basisnetz belegte Kanäle aus dem Satz von verfügbaren Kanälen entfernt wurden; und
- Fig. 7: die Frequenzsprungtabelle aus Fig. 6, jedoch mit anderer Verteilung der Kanäle.

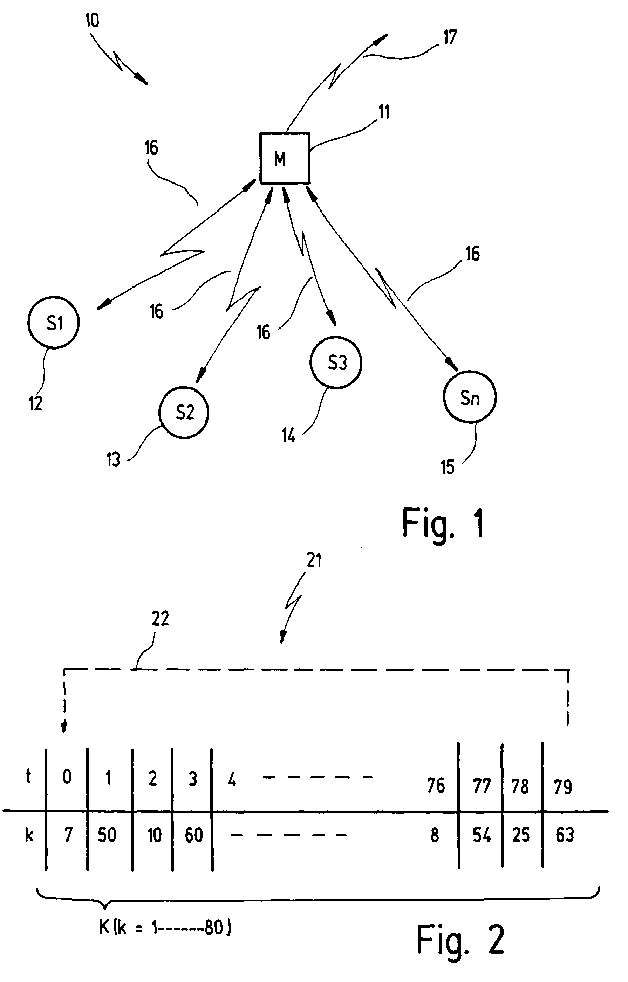

In Fig. 1 ist schematisch ein Netz 10 von Sekundärnutzern gezeigt, zu denen eine Zentralstation 11 sowie mehrere Anwenderstationen 12, 13, 14 und 15 zählen. Die Anwenderstationen 12, 13, 14 und 15 sind über interne Funkverbindungen 16 mit der Zentralstation 11 verbunden, die wiederum über eine externe Funkverbindung 17 mit weiteren Stationen verbunden ist.

Das Netz 10 ist hierarchisch strukturiert, die Anwenderstationen 12, 13, 14, 15 können lediglich über die Zentralstation 11 miteinander kommunizieren. Auch der Kontakt zu weiteren, externen Stationen erfolgt über die Zentralstation 11.

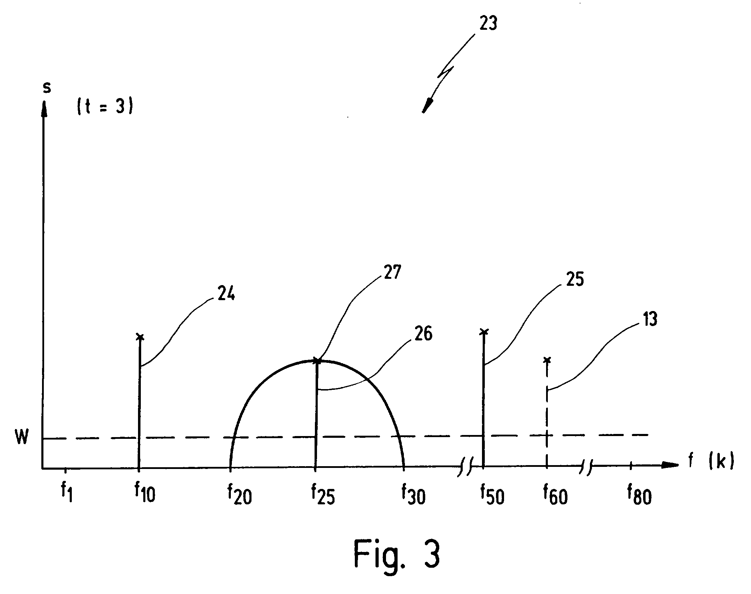

Das Netz 10 verwendet für die Datenübertragung Kanäle eines im Zusammenhang mit Fig. 3 näher beschriebenen Frequenzspektrums im Frequenzsprungverfahren. Hierzu ist sowohl in der Zentralstation 11 als auch in den Anwenderstationen 12, 13, 14, 15 jeweils eine in Fig. 2 gezeigte Frequenzsprungtabelle 21 abgespeichert, die zyklisch durchlaufen wird, wie der Pfeil 22 andeutet.

In dem gezeigten Beispiel ist in der Frequenzsprungtabelle 21 ein Satz K(k=1...80) von 80 Kanälen statistisch verteilt so angeordnet, daß zwischen zwei aufeinanderfolgenden Kanälen K(k) ein möglichst großer Sprungabstand vorhanden ist. Dadurch wird sichergestellt, daß die Phasenlagen von zwei aufeinanderfolgenden Kanälen einen großen Abstand zueinander aufweisen, so daß bei dem einen Kanal möglicherweise auftretende, störende Interferenzen bei dem nächsten Kanal mit großer Sicherheit vermieden werden.

Das Netz 10 arbeitet mit einer Systemzeit, die aufeinanderfolgende Zeitschlitze definiert, wobei in jedem Zeitschlitz über den jeweils gültigen Kanal ein Datenpaket zwischen der Zentralstation 11 sowie einer der Anwenderstationen 12, 13, 14, 15 übertragen wird. In dem Zeitschlitz zur Zeit t = 0 wird z.B. über den Kanal 7 übertragen, während in dem Zeitschlitz t = 77 über den Kanal 54 übertragen wird.

Die Frequenzsprungtabelle 21 wird zyklisch durchlaufen, so daß sich an den Zeitschlitz t = 79 wieder der Zeitschlitz t = 0 anschließt. Für welche Anwenderstation 12, 13, 14 oder 15 eine Sendung der Zentralstation 11 bestimmt ist, ergibt sich aus einer Adresse, die die Zentralstation 11 dem in dem jeweiligen Zeitschlitz zu übersendenden Datenpaket voranstellt. Mit anderen Worten, während die Systemzeit über den Zeitschlitz den jeweils zu verwendenden Kanal bestimmt, gibt die Zentralstation 11 bei der Datenübertragung den Adressaten an. Ferner wird während dieser Datenübertragung mitgeteilt, welche Anwenderstation 12, 13, 14, 15 in dem nächsten Zeitschlitz die Sendeberechtigung erhält. Der Kanal des nächsten Zeitschlitzes ergibt sich dabei aus der Frequenzsprungtabelle 21 aus Fig. 2.

Zusätzlich zu ihren jeweiligen Datenpaketen übermitteln die Anwenderstationen 12, 13, 14, 15 der Zentralstation 11 auch eine Information über die Zahl der noch zu übertragenden Datenpakete, so daß die Zentralstation 11 die Sendeberechtigung lastabhängig vergeben kann. Damit durch eine Anwenderstation 12, 13, 14, 15 mit hohem Datenaufkommen die anderen Anwenderstationen 13, 14, 15, 12 nicht völlig von der Übertragung ausgeschlossen werden, wird die Sendeberechtigung nicht allein aufgrund des Datenaufkommens sondern ebenfalls danach vergeben, wieviel Zeit seit der letzten Datenübertragung der jeweiligen Anwenderstation 13, 14, 15, 12 verstrichen ist.

Das insoweit beschriebene Netz 10 arbeitet jedoch nicht in einem exklusiven Frequenzbereich, es ist vielmehr ein Zusatznetz, das sich einem bestehenden Netz überlagert, wie es jetzt anhand der Fig. 3 beschrieben werden soll.

Fig. 3 zeigt in schematischer Weise ein von Primärnutzern genutztes Frequenzspektrum 23, das auch von den Sekundärnutzern des Netzes aus Fig. 1 in einer Art "Zusatznetz" genutzt wird. Das Frequenzspektrum umfaßt beispielhaft f(k) Kanäle f₁ bis f₈₀, wobei bei f₁₀ und f₅₀ jeweils ein Primärnutzer 24, 25 sendet, während bei f₆₀ der Sekundärnutzer 13 zu finden ist. Das Zusatznetz arbeitet also bei der Systemzeit t = 3.

Neben den sehr schmalbandigen Primärnutzern 24, 25 sowie dem Sekundärnutzer 13 ist noch ein weiterer Primärnutzer 26 vorhanden, dessen Mittenfrequenz bei f₂₅ liegt. Dieser Primärnutzer 26 ist jedoch sehr breitbandig und weist eine spektrale Glockenkurve 27 auf, die sich von f₂₀ bis zu f₃₀ erstreckt. In den Randbereichen dieser Glockenkurve, also oberhalb von f₂₀ und unterhalb von f₃₀ ist die Sendeenergie S des Primärnutzers 26 jedoch so gering, daß sie unterhalb einer detektierbaren Schwelle W liegt, so daß ein Sekundärnutzer z. B. auf den Kanälen f₂₁ sowie f₂₉ kein Signal empfangen könnte und diesen Kanal daher als frei ansehen würde.

Wie bereits erwähnt, verwenden die Sekundärnutzer die Kanäle f₁ bis f₈₀ zur Datenübertragung nach Art der Frequenzsprungtechnik, wobei zur Vermeidung von Störungen der Primärnutzer zu Beginn einer jeden möglichen Datenübertragung überprüft wird, ob der jeweils gerade ausgewählte Frequenzkanal von Primärnutzern belegt ist. Das grundlegende Verfahren wird ausführlich in der eingangs erwähnten DE 44 07 544 A1 beschrieben, so daß auf weitere Erläuterungen hier verzichtet werden kann.

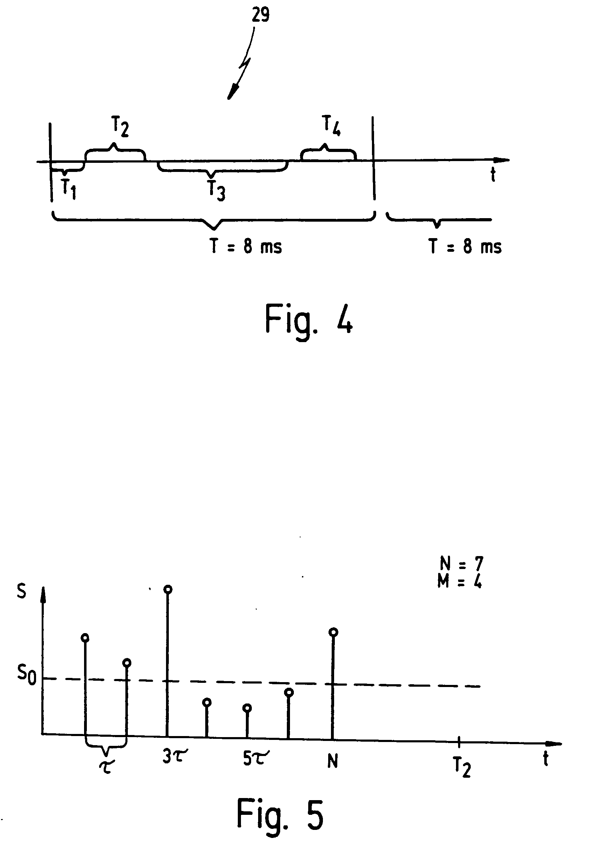

Zu jedem Zeitpunkt weiß somit ein sendendes bzw. empfangendes Endgerät, über welchen Kanal diese Sendung zu erfolgen hat. Damit diese mögliche Sendung nicht einen Primärnutzer stört, wird vor der Aussendung eines Datenpaketes in dem jeweiligen Zeitschlitz überprüft, ob der ausgewählte Kanal gerade von einem Primärnutzer belegt wird. Die hierzu erforderlichen einzelnen Operationen werden jetzt anhand der schematischen Darstellung der Fig. 4 erörtert.

Fig. 4 zeigt auf der Zeitachse einen schematisch angedeuteten Zeitschlitz 29 von T = 8 ms. Zu Beginn dieses Zeitschlitzes 29 wird zunächst der Sender des sendenden Endgerätes auf den ausgewählten Kanal eingestellt, was während der Zeit T₁ = 50 ns erfolgt.

Daraufhin wird während der Zeit T₂ = 500 µs dieser Kanal auf Belegung abgefragt. Wenn der Kanal frei ist, so wird während der Zeit T₃, die sich an T₂ anschließt, wenn auch nicht unmittelbar, ein Datenpaket übertragen, wozu 4 ms zur Verfügung stehen. Dieses Datenpaket besteht in bekannter Weise aus einem Header, einem Datenpaket von 256 Bit sowie einem Trailer.

Nach der Übertragung des Datenpaketes wird bei T₄ noch eine gewisse Zeit gewartet, ob der Empfänger den Empfang des Datenpaketes bestätigt. Sofern diese Bestätigung eingeht, wird in dem nächsten Zeitschlitz das nächste Datenpaket übertragen, bleibt die Bestätigung aus, wird dasselbe Datenpaket in dem nächsten Zeitschlitz noch einmal übertragen.

Wenn bei der Überprüfung in T₂ erkannt wird, daß der ausgewählte Kanal bereits durch Primärnutzer belegt ist, verstreicht der Rest der Zeit des Zeitschlitzes ungenutzt, und zu Beginn des nächsten Zeitschlitzes beginnen die soeben beschriebenen Operationen von vorne.

Es ist nicht möglich, aus dem Raster der Zeitschlitze herauszuspringen, da diese Zeitschlitze der Synchronisation zwischen dem Sender und dem Empfänger dienen, die nicht gestört werden darf.

In Fig. 5 ist schematisch der Beginn der Überprüfung während der Zeit T₂ dargestellt. Fig. 5 zeigt die Signalamplitude S des ausgewählten Kanales über der Zeit, die in zeitlichen Abständen τ insgesamt N mal abgetastet wird. Bei dieser Abtastung wird abgefragt, ob der Signalpegel oberhalb oder unterhalb eines Schwellwertes S₀ liegt. Liegt der Signalpegel M mal oberhalb der Signalschwelle S₀, so wird davon ausgegangen, daß ein Primärnutzer den ausgewählten Kanal gerade verwendet. Die Signalschwelle S₀ liegt in der Nähe des Rauschens, so daß eine gewisse Zahl N von Abtastungen erforderlich ist, um mit einer gewissen Sicherheit eine Sendung des Basisnetzes erkennen bzw. ausschließen zu können. N ist hierbei vorzugsweise = 10, wobei M z.B. 5 betragen kann. Wenn mehr als die Hälfte der Abtastungen oberhalb der Signalschwelle S₀ liegt, kann mit einer gewissen Sicherheit davon ausgegangen werden, daß tatsächlich eine Sendung eines Primärnutzers vorliegt, so daß der ausgewählte Kanal nicht zur Datenübertragung im Zusatznetz zur Verfügung steht. Diese Information wird jetzt weiterverarbeitet, um einerseits den Primärnutzer sicher vor Störungen durch das Zusatznetz zu schützen, andererseits aber den Datendurchsatz durch das Zusatznetz zu maximieren.

Jedem Kanal aus dem Satz K(k=1...80) von Kanälen wird zumindest eine Zustandsvariable zugeordnet, die zumindest dann aktualisiert wird, wenn der Kanal ausgewählt und abgetastet wird. Dadurch entsteht eine Matrix oder Liste von Zustandsvariablen, die den Zustand des Frequenzspektrums 23 bezüglich der Belegung durch Primärnutzer 24, 25, 26 charakterisiert. Diese Zustandsvariablen geben den reinen Belegtzustand nicht nur in Form einer Ja/Nein-Entscheidung an, sie enthalten vielmehr weitere Informationen über den jeweils ausgewählten Kanal, wozu bspw. die mittlere Signalstärke des auf dem ausgewählten Kanal sendenden Primärsenders zählt sowie die durchschnittliche "Trefferquote" bei der Abhörung des ausgewählten Kanals. Anhand dieser Zustandsvariablen erkennt die Zentralstation 11 die Art des Primärnutzers 24, 25, 26 sowie seine spektrale Bandbreite, wie dies ausführlich in der eingangs erwähnten, älteren Patentanmeldung beschrieben wird.

Darüber hinaus enthalten die Zustandsvariablen Informationen darüber, ob es sich um einen lediglich temporären Primärnutzer oder aber um einen dauerhaften Primärnutzer handelt, der den jeweiligen Kanal für längere Zeit dauerhaft belegt.

Bei temporären Primärnutzern werden die jeweiligen Kanäle für eine bestimmte Zeit lediglich von der Datenübertragung ausgeschlossen, selbst dann, wenn bei der aktuellen Auswahl des jeweiligen Kanals ein Senden des Primärnutzers nicht erkannt wird. In diesem Falle werden lediglich die zugeordneten Zustandsvariablen aktualisiert, der Zeitschlitz verstreicht im übrigen aber ungenutzt, so daß hierdurch der mittlere Datendurchsatz des Zusatznetzes verringert wird.

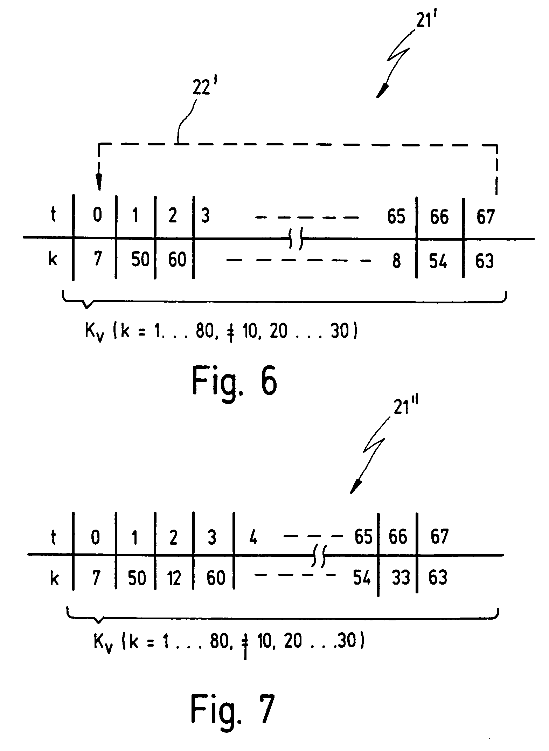

Wenn die Zustandsvariablen jedoch ergeben, daß Kanäle des Frequenzspektrums nicht nur vorübergehend von Primärnutzern belegt sind, so werden diese Kanäle aus dem Satz von verfügbaren Kanälen entfernt, so daß sie zumindest für eine bestimmte Zeit keine Zeitschlitze mehr belegen. Mit anderen Worten, die Frequenzsprungtabelle 21 aus Fig. 2 muß entsprechend aktualisiert werden, wie es jetzt anhand der Fig. 6 und 7 beschrieben werden soll.

Es sei angenommen, daß der Primärnutzer 25 auf dem Kanal f₅₀ lediglich temporär vorhanden ist, während die Primärnutzer 24 und 26 die Kanäle f₁₀ sowie f₂₀ bis f₃₀ nicht nur vorübergehend belegen. Diese Information kann in der Zentralstation 11 selbst erzeugt werden, es ist aber auch möglich, daß eine Anwenderstation 12, 13, 14, 15 diese Information ermittelt und in einem besonderen Servicepaket an die Zentralstation 11 übermittelt.

Die Zentralstation 11 erzeugt jetzt einen Satz Kᵥ(k=1...80; ≠ 10, 20...30) von verfügbaren Kanälen, der der Menge der insgesamt vorhandenen Kanäle K(k=1...80) vermindert um die entfernten Kanäle k=10, 20...30 entspricht.

Dieser Satz Kᵥ von verfügbaren Kanälen führt jetzt zu einem veränderten Frequenzspektrum 21', das in Fig. 6 dargestellt ist. In Fig. 6 ist der einfache Fall angenommen, bei dem die Kanäle k=10, 20....30 lediglich aus der Frequenzsprungtabelle 21 entfernt wurden, wobei die so entstehenden Leerstellen dann dadurch gefüllt wurden, daß die Kanäle sozusagen "nach links hochgeschoben" wurden, um zu der Frequenzsprungtabelle 21' zu gelangen. Es ist zu erkennen, daß bei dem Zeitschlitz t = 1 immer noch der Kanal f₅₀ zu finden ist, da der zugehörige Primärnutzer 25 als temporärer Primärnutzer erkannt wurde. Der ursprünglich dem Zeitschlitz t = 2 zugeordnete Kanal f₁₀ wurde jedoch entfernt und durch den Kanal f₆₀ ersetzt, der vorher im Zeitschlitz t = 3 zu finden war. Die Zahl der insgesamt verfügbaren Kanäle hat sich durch das Entfernen von 80 auf 68 verringert, so daß nach dem Zeitschlitz t = 67 wieder auf den Zeitschlitz t = 0 zurückgesprungen wird, was der Pfeil 22' anzeigt.

Durch dieses reine Entfernen und Zusammenschieben der Kanäle ergibt sich jetzt jedoch, daß bei der Frequenzsprungtabelle 21' aus Fig. 6 z.B. bei den Zeitschlitzen t = 1 und t = 2 aufeinanderfolgend zwei dicht benachbarte Kanäle f₅₀ und f₆₀ zur Übertragung verwendet werden, was nicht den gewünschten Erfolg bei der Vermeidung von störenden Interferenzen mit sich bringt.

Daher ist in Fig. 7 eine weitere Frequenzsprungtabelle 21'' gezeigt, bei der derselbe Satz Kᵥ von verfügbaren Kanälen verwendet wird, wobei die statistische Gleichverteilung der Kanäle jedoch neu hergestellt wurde. Hierzu wurde dem Zeitschlitz t = 2 der Kanal f₁₂ zugeordnet, so daß der Kanal f₆₀ dem Zeitschlitz t = 3 verbleibt. Genauso wurde der Zeitschlitz t = 66 durch den Kanal f₃₃ aufgefüllt. Auf diese Weise wird für eine bessere statistische Gleichverteilung der Kanäle in der Frequenzsprungtabelle 21'' gesorgt.

Die so geänderte Frequenzsprungtabelle 21'' übermittelt die Zentralstation 11 jetzt in einem besonderen Servicepaket "Frequenzsprungtabelle ändern" an die Anwenderstation 12, 13, 14, 15, so daß diese sich wieder mit der Zentralstation 11 synchronisieren können.

Nachdem diese Neusynchronisation stattgefunden hat, erfolgt die Datenübertragung jetzt zwar nur noch über 68 und nicht mehr über 80 Kanäle, der mittlere Datendurchsatz über der Zeit wurde jedoch wieder maximiert, da keine dauerhaft "leeren" Zeitschlitze mehr auftreten können. Da zudem die gesamte Bandbreite 27 des Primärnutzers 26 aus dem Satz von verfügbaren Kanälen entfernt wurde, ist auch dieser breitbandige Primärnutzer 26 sicher vor Störungen durch Sekundärnutzer geschützt.

Auch während der weiteren Datenübertragung in dem Netz 10 werden die Zustandsvariablen aller 80 Kanäle weiter aktualisiert. Insbesondere wird dabei darauf geachtet, ob die aus dem Satz Kᵥ der verfügbaren Kanäle entfernten Kanäle f₁₀, f₂₀...f₃₀ nach wie vor belegt sind oder aber wieder zur Datenübertragung zur Verfügung stehen. Wenn die aktualisierten Zustandsvariablen anzeigen, daß entfernte Kanäle wieder zur Datenübertragung zur Verfügung stehen, wird die Frequenzsprungtabelle auf die oben beschriebene Weise wieder aktualisiert.

Abschließend sei noch erwähnt, daß bei der Neusynchronisation nicht zwingend die gesamte Frequenzsprungtabelle von der Zentralstation 11 zu der Anwenderstation 12, 13, 14, 15 übertragen werden muß, es ist völlig ausreichend, wenn Sequenz-Parameter übermittelt werden, aus denen sich die aktuelle Frequenzsprungtabelle z.B. mit Hilfe eines Pseudo-Zufallsgenerators ermitteln läßt.

## Patentansprüche

1. Verfahren zum Betreiben eines Netzes (10) von Sekundärnutzern (11, 12, 13, 14, 15), das einen Satz (K) von Kanälen (f) in einem von Primärnutzern (24, 25, 26) genutzten Frequenzspektrum (23) im Frequenzsprungverfahren zur Datenübertragung verwendet, wobei ein von dem Netz (10) von Sekundärnutzern (11, 12, 13, 14, 15, 16) jeweils ausgewählter Kanal (k) vor einer möglichen Datenübertragung abgehört und daraufhin überprüft wird, ob Primärnutzer (24, 25, 26) diesen Kanal (k) zur Zeit belegen, und das Netz (10) von Sekundärnutzern (12, 13, 14, 15, 16) in Abhängigkeit von dem Ergebnis dieser Überprüfung entweder Daten über den ausgewählten Kanal (k) überträgt oder einen neuen Kanal (k) zur Überprüfung und möglichen Datenübertragung auswählt,
dadurch gekennzeichnet, daß ein Satz (Kᵥ) von für die Sekundärnutzer (11, 12, 13, 14, 15) verfügbaren Kanälen (k) dadurch erzeugt wird, daß ein von einem Primärnutzer (24, 26) nicht nur vorübergehend belegter Kanal (f₁₀, f₂₀...f₃₀) zumindest zeitweise aus dem Satz (K) von Kanälen (f) entfernt wird.

2. Verfahren nach Anspruch 1, dadurch gekennzeichnet, daß die Kanäle (k) aus dem Satz (Kᵥ) von verfügbaren Kanälen in einer Frequenzsprungtabelle (21) abgelegt sind, die zusammen mit einer Systemzeit (t) definiert, welcher Kanal (k) als nächster auszuwählen ist, und die in Abhängigkeit von der Belegung von Kanälen (f) durch Primärnutzer (24, 25, 26) aktualisiert wird.

3. Verfahren nach Anspruch 1, dadurch gekennzeichnet, daß aus einer Systemzeit (t) des Netzes (10) von Sekundärnutzern (11, 12, 13, 14, 15) sowie dem Satz (Kᵥ) der verfügbaren eine Pseudo-Zufallszahl generiert wird, die bestimmt, welcher Kanal als nächster auszuwählen ist.

4. Verfahren nach einem der Ansprüche 1 bis 3, dadurch gekennzeichnet, daß das Netz (10) von Sekundärnutzern (11, 12, 13, 14, 15) eine Zentralstation (11) sowie mehrere Anwenderstationen (12, 13, 14, 15) umfaßt, wobei die Zentralstation (11) den Satz (Kᵥ) von verfügbaren Kanälen erzeugt und an die Anwenderstationen (12, 13, 14, 15) weitergibt.

5. Verfahren nach einem der Ansprüche 1 bis 4, dadurch gekennzeichnet, daß zusätzlich zu dem ausgewählten zumindest ein weiterer Kanal zumindeset einmal nicht zur Datenübertragung verwendet wird, wenn der ausgewählte Kanal gerade von einem Primärnutzer (24, 25, 26) belegt ist.

6. Verfahren nach einem der Ansprüche 1 bis 5, dadurch gekennzeichnet, daß jedem Kanal zumindest eine Zustandsvariable zugeordnet ist, deren Wert zyklisch aktualisiert wird und angibt, ob der ihr zugeordnete Kanal (k) durch Primärnutzer (24, 25, 26) belegt ist.

7. Verfahren nach Anspruch 6, dadurch gekennzeichnet, daß zumindest einigen Kanälen weitere Zustandsvariablen zugeordnet sind, deren Werte aus Abhörergebnissen gebildet und dazu verwendet werden, den Wert der zumindest einen Zustandsvariablen zu aktualisieren.

8. Verfahren nach einem der Ansprüche 1 bis 7, dadurch gekennzeichnet, daß bei dem Abhören eines ausgewählten Kanales (k) dessen Sigualpegel (S) in zeitlichen Abständen (τ) N mal auf das Überschreiten einer Signalschwelle (S₀) abgetastet wird.

9. Verfahren nach Anspruch 8, dadurch gekennzeichnet, daß der Signalpegel (S) des abgetasteten Kanales (k) die Signalschwelle (S₀) M mal überschreiten muß, damit ein Senden von Primärnutzern auf diesem Kanal (k) erkannt wird.

10. Verfahren nach Anspruch 9, dadurch gekennzeichnet, daß M größer oder gleich N/2 sein muß, damit ein Senden von Primärnutzern auf dem ausgewählten Kanal (k) erkannt wird.

11. Verfahren nach Anspruch 9, dadurch gekennzeichnet, daß M manuell auf einen festen Wert (0 < M ≤ N) festgesetzt oder dynamisch in Abhängigkeit von einer Auswertung des Abhörens des ausgewählten Kanals (k) bestimmt wird.

12. Sekundärnutzer für ein Netz (10) von derartigen Sekundärnutzern (11, 12, 13, 14, 15), das einen Satz (K) von Kanälen (f) in einem von Primärnutzern (24, 25, 26) genutzten Frequenzspektrum (23) im Frequenzsprungverfahren zur Datenübertragung verwendet, wobei ein von dem Netz (10) von Sekundärnutzern (11, 12, 13, 14, 15, 16) jeweils ausgewählter Kanal (k) vor einer möglichen Datenübertragung abgehört und daraufhin überprüft wird, ob Primärnutzer (24, 25, 26) diesen Kanal (k) zur Zeit belegen, und das Netz (10) von Sekundärnutzern (12, 13, 14, 15, 16) in Abhängigkeit von dem Ergebnis dieser Überprüfung entweder Daten über den ausgewählten Kanal (k) überträgt oder einen neuen Kanal (k) zur Überprüfung und möglichen Datenübertragung auswählt, dadurch gekennzeichnet, daß der Sekundärnutzer (11, 12, 13, 14, 15) dazu eingerichtet ist, den Satz (K) von Kanälen dynamisch zu verwalten, um der Belegung von Kanälen (k) durch Primärnutzer (24, 25, 26) Rechnung zu tragen.

13. Sekundärnutzer nach Anspruch 12, dadurch gekennzeichnet, daß er als Zentralstation (11) dazu eingerichtet ist, einen aktuellen Satz (Kᵥ) von verfügbaren Kanälen zu erzeugen und diesen an Anwenderstationen (12, 13, 14, 15) des Netzes (10) zu übertragen.
